# EUROPÄISCHE PATENTSCHRIFT

(11) **EP 2 016 389 B1**
(45) Veröffentlichungstag und Bekanntmachung des Hinweises auf die Patenterteilung: **10.08.2011**
(21) Anmeldenummer: 07722352.7
(22) Anmeldetag: 30.04.2007
(51) Int. Cl.: G01N 15/14

(54) **VERFAHREN UND VORRICHTUNG ZUR BESTIMMUNG DER IN EINEM PARTIKELSTROM ENTHALTENEN PARTIKEL**
METHOD AND APPARATUS FOR DETERMINING THE PARTICLE CONTAINED IN A PARTICLE STREAM
PROCÉDÉ ET DISPOSITIF DE DÉTERMINATION DES PARTICULES CONTENUES DANS UN COURANT DE PARTICULES

(30) Priorität: 05.05.2006 DE 102006021487
(43) Veröffentlichungstag der Anmeldung: 21.01.2009
(73) Patentinhaber: Parsum Gmbh, 09126 Chemnitz (DE)
(72) Erfinder: DIETRICH, Stefan, 09128 Chemnitz (DE); ECKARDT, Günter, 09116 Chemnitz (DE); KÖHLER, Michael, 09353 Oberlungwitz (DE)
(74) Vertreter: Rumrich, Gabriele
(86) Internationale Anmeldenummer: PCT/DE2007/000795
(87) Internationale Veröffentlichungsnummer: WO 2007/128279

(56) Entgegenhaltungen:
- EP-A- 0 924 510
- EP-A- 1 039 289
- GB-A- 1 588 170
- US-A- 5 452 237

## Beschreibung

Die Erfindung betrifft ein Verfahren und eine Vorrichtung zur Bestimmung der in einem Partikelstrom enthaltenen Partikel nach dem Oberbegriff des ersten Patentanspruchs.

Aus DE 199 11 654 C1 und EP1039289A2 ist eine Einrichtung zur Bestimmung der Geschwindigkeit und der Größe von Partikeln bekannt, wobei die Partikel in einem Messvolumen mit Primärlicht einer Beleuchtungseinrichtung beleuchtet werden, wobei dass durch die Partikel beeinflusste Licht auf zwei Lichtempfängern abgebildet wird, die in Bewegungsrichtung der Partikel nebeneinander angeordnet sind und wobei aus Zeitmessungen die Größe der Partikel bestimmt wird und die kreisförmige Lichtempfangsfläche des ersten Lichtempfängers von der kreisringförmigen Lichtempfangsfläche des zweiten Lichtempfängers umgeben ist. In DE 197 18 875 C1 wird ein Verfahren zur Bestimmung der in einem gasförmigen oder flüssigen Trägermedium enthaltenen Partikel beschrieben, mit dem sehr kleine Partikelgrößen ermittelt und Aussagen zur geometrischen Form getroffen werden können. Dies wird erreicht, indem mindestens drei auf ein Messvolumen gerichtete Lichtquellen und mindestens drei Detektoren gleichzeitig betrieben und die von den Detektoren ermittelten Streulichtwerte korreliert ausgewertet werden. Nachteilig bei den vorgenannten Lösungen ist, dass keine Koinzidenzerkennung möglich ist, so dass zwei oder mehr direkt aufeinander folgende Teilchen nicht als einzelne Teilchen sondern als ein einziges größeres Partikel erfasst werden. Ein optisches Partikelzählsystem mit Koinzidenzerkennung ist aus DE 198 22 652 A1 bekannt. Durch die Betrachtung von Impulshöhe, Impulslänge und der gleichzeitigen Erfassung der Strömungsgeschwindigkeit wird der durch ein oder mehrere Partikel erzeugte Spannungsimpuls auf mögliche Koinzidenzen untersucht. Es werden Koinzidenzfehler ausgewertet und es können Impulshöhe und Impulslänge in Form einer Kalibriertabelle bzw. Kennlinie in Abhängigkeit vom Partikeldurchmesser hinterlegt werden. Außerdem muss mit konstanter Strömungsgeschwindigkeit gearbeitet werden oder die Strömungsgeschwindigkeit mit erfasst werden.

In der Druckschrift US 55 61 515 A wird eine Vorrichtung zur Bestimmung (Größe und Geschwindigkeit) der in einem Partikelstrom enthaltenen Partikel beschrieben, mit welcher zwei Strahlengänge 32a, 32b erzeugt werden, die in Strömungsrichtung versetzt zueinander angeordnet sind und die im Messvolumen ein Strahlungsintensitätsprofil erzeugen, das in Strömungsrichtung einen "Dacheinbruch" aufweist. In Abhängigkeit von der empfangenen Strahlungsintensität wird einer Auswerteeinheit ein elektrisches Signal zur Verfügung gestellt und die Koinzidenz durch einen Vergleich des Kurvenverlaufs des Signals mit dem "Dacheinbruch" bestimmt wird. Aus US 57 93 478 A ist eine Vorrichtung zur Bestimmung der in einem Partikelstrom enthaltenen Partikel bekannt mit einer Strahlungsquelle, die einen Strahl erzeugt, der entlang des Partikelpfades ein Intensitätsprofil aufweist mit mindestens einem "Dacheinbruch", wobei das von einem Empfänger zur Verfügung gestellte Signal in Abhängigkeit des Pfades des/der Partikel erzeugt wird und durch Vergleich mit dem Intensitätsprofil eine Koinzidenz von zwei Partikeln beim Durchgang durch den Strahl oder einen unvollständigen Durchgang von Partikeln durch den Strahl feststellbar ist. Die drei vorgenannten Systeme sind relativ aufwändig.

Das Dokument EP0924510 A1 bezieht sich auf ein System zur Messung mehrerer Detektionssignale eines Partikels oder einer Zelle, zum Beispiel Ein-oder Mehrfarben-Fluoreszenz oder senkrecht zur Einfallsrichtung gestreuten Streulichts, wobei die verschiedenen Detektionssignale oder Parameter zu verschiedenen Zeiten gemessen werden können, und wobei Koinzidenzen dicht benachbarter Partikel mit Hilfe eines Duplett-Komparators aus einem "Dacheinbruch" bei der Signalauswertung bestimmt und zur Anpassung der Schwellenspannung des entsprechenden Signals dienen, so dass alle Zellen angemessen charakterisiert werden können.

Aufgabe der Erfindung ist es, ein Verfahren und eine Vorrichtung zur Bestimmung der in einem Partikelstrom enthaltenen Partikel zu entwickeln, die eine einfache Erkennung und ggf. Korrektur von Koinzidenzen gestattet und auch für Partikelströme mit unbekannter sehr breiter Geschwindigkeitsverteilung und breit verteilten Partikelgrößen einsetzbar ist.

Diese Aufgabe wird mit den kennzeichnenden Merkmalen der Patentansprüche 1 und 9 gelöst. Vorteilhafte Ausbildungen ergeben sich aus den Unteransprüchen.

Das Verfahren zur Bestimmung der in einem Partikelstrom enthaltenen Partikel erfolgt unter Verwendung einer Strahlungsquelle und zwei in Strömungsrichtung versetzt zueinander angeordneten Empfängern, die in Abhängigkeit von der beim Passieren des Partikelstroms empfangenen Strahlungsintensität einer Auswerteeinheit ein elektrisches Signal zur Verfügung stellen, wobei das elektrische Signal (neben der Bestimmung von Strömungsgeschwindigkeit und Partikelgröße) zur Koinzidenzerkennung dient und ein im Signal bei Passieren der Partikel eines Empfängers durch eine Schwächung der Strahlungsintensität auftretender Puls durch einen im Puls vorhandenen"Dacheinbruch" eine Koinzidenz anzeigt.

Dabei werden die Empfänger nicht während der gesamten Zeit des Passierens der Partikel vollständig abgeschattet, wodurch während des Passierens der Partikel kurzzeitig eine Strahlung in dem jeweiligen Empfänger ankommt, so dass bei Koinzidenz der "Dacheinbruch" erfolgt.

Es ist möglich, eine Größenverteilung erkannter Koinzidenzen zu bilden und als Korrekturverteilung von der gemessenen Partikelgrößenverteilung abzuziehen. Weiterhin kann aus der Verteilung erkannter Koinzidenzen auf eine Verteilung nicht erkennbarer Koinzidenzen geschlossen werden, wobei die Verteilung nicht erkennbarer Koinzidenzen ebenfalls als Korrekturverteilung von der gemessenen Partikelgrößenverteilung abgezogen werden kann.

Ferner könner erkannte Koinzidenzen als ungültige Messungen verworfen werden.

Die Zuordnung der Signale erfolgt dadurch, dass zwischen dem ersten Signal eines ersten Empfängers und dem zweiten Signal eines zweiten Empfängers zur Ermittlung einer durchschnittlichen Zeitverschiebung zwischen beiden Signalen eine Kreuzkorrelation durchgeführt wird.

Ausgehend von einem Puls mit einer Position X im ersten Signal des ersten Empfängers wird an der Position X+t (und mit größer werdenden Abständen um diese Position herum) im zweiten Signal des zweiten Empfängers ein Puls gesucht.

Durch die Prüfung vorgegebener Toleranzen für die Pulsbreite kann nun festgestellt werden, ob ein im zweiten Signal hervorgerufener Puls identisch mit dem im ersten Signal hervorgerufenen Puls ist. Dies ist insbesondere von Bedeutung, wenn die Geschwindigkeiten sehr große Unterschiede aufweisen und dadurch die Gefahr von Fehlmessungen gegeben ist.

Zur Erkennung des Verschmutzungsgrades wird im ersten Signal des ersten Empfängers und/oder im zweiten Signal des zweiten Empfängers Nullpegel zwischen den einzelnen Pulsen erfasst. Dieser Nullpegel wird als Maß für eine Verschmutzung einer den Messspalt umgebenden durchsichtigen Wandung ausgewertet. Eine Verschiebung des Nullpegels nach oben zeigt dabei eine größere Verschmutzung an.

Weiterhin ist es möglich, mittels einer oder mehrerer Anzetgeeinheit/en, die gemeinsam mit dem ersten Empfänger dem zweiten Empfänger und der Auswerteeinheit in einem gemeinsamen Gehäuse der Messsonde angeordnet ist/sind, den Zustand während des Betriebes anzuzeigen.

Bevorzugt wird dabei
- mit einer ersten Anzeigeeinheit der Zustand Ein/Aus,
- mittels einer zweiten Anzeigeeinheit die Laserintensität und
- mittels einer dritten Anzeigeeinheit die Signalstärke
angezeigt.

Die Vorrichtung zur Bestimmung der in einem Partikelstrom enthaltenen Partikel gemäβ dem Anspruch 9 weist unter anderen eine Strahlungsquelle und zwei in Strömungsrichtung versetzt zueinander angeordnete Empfänger auf, die in Abhängigkeit von der beim Passieren des Partikelstroms empfangenen Strahlungsintensität einer Auswerteeinheit ein elektrisches Signal zur Verfügung stellen, wobei eine Koinzidenz aus einem im Kurvenverlauf des Signals bei Passieren der Partikel auftretenden Puls und einem im Puls vorhandenen "Dacheinbruch" bestimmt wird.

In der Auswerteeinheit wird weiterhin zwischen dem ersten Signal des ersten Empfängers und aus dem zweiten Signal des zweiten Empfängers beiden Signalen zur Ermittlung einer durchschnittlichen Zeitverschiebung zwischen den beiden Signalen eine Kreuzkorrelation durchgeführt.

Bei einem Puls mit einer Position X im ersten Signal des ersten Empfängers wird ein Puls im zweiten Signal des zweiten Empfängers an der Position X + t ermittelt, wobei in der Auswerteeinrichtung vorgegebene Toleranzen für die Pulsbreite auswertbar sind.

Weiterhin weist die Vorrichtung einen Messspalt mit einer durchsichtigen Wandung auf, hinter welcher der erste Empfänger und der zweite Empfänger angeordnet sind, wobei der Nullpegel zwischen den einzelnen Pulsen als Maß für eine Verschmutzung der Wandung in der Auswerteeinheit auswertbar ist.

Eine oder mehrere Anzeigeeinheit/en sind gemeinsam mit dem ersten Empfänger, dem zweiten Empfänger der Auswerteeinheit in einem gemeinsamen Gehäuse angeordnet.

Eine erste Anzeigeeinheit zeigt den Zustand Ein/Aus, eine zweite Anzeigeeinheit die Laserintensität der Strahlungsquelle (Lichtquelle) und eine dritte Anzeigeeinheit die Signalstärke an. Bevorzugt ist/sind die Anzeigeeinheit/en als LED/LEDs ausgebildet, die unterschiedliche Farben entsprechend des anzuzeigenden Zustandes aufweisen.

Mit der erfindungsgemäßen Lösung ist es auf einfache Art und Weise möglich, neben der bekannten Messung der Strömungsgeschwindigkeit und der Partikelgröße auf einfache Art und Weise eine Koinzidenzerkennung und -korrektur sowie eine Verschmutzungserkennung durchzuführen und unterschiedliche Zustände sowie eventuelle Fehler der Messsonde zu signalisieren.

Die Erfindung wird nachfolgend anhand von Ausführungsbeispielen und zugehörigen Zeichnungen näher erläutert. Es zeigen:
- Fig. 1:: Prinzipdarstellung der Vorrichtung,
- Fig. 2:: Signalverlauf bei Erfassen eines Partikels,
- Fig. 3:: vereinfachte Darstellung der Vorrichtung bei zwei nebeneinander be- findlichen Partikeln.
- Fig. 4:: Signalverlauf bei Erfassen von zwei Partikeln,
- Fig. 5:: Kurvenverlauf gemessener Partikelgrößenverteilung, Korrekturvertei- lung der gemessenen und nicht gemessenen Koinzidenzen und Ergeb- nisverteilung,
- Fig. 6:: Diagramm der auftretenden Pulse bei geringer Partikelkonzentration mit normaler Zuordnung der Signale,
- Fig. 7:: Diagramm der auftretenden Pulse bei hoher Partikelkonzentration mit Fehlzuordnung der Signale,
- Fig. 8:: Diagramm der Pulssignale bei unverschmutzter und verschmutzter Wandung des Messspaltes.

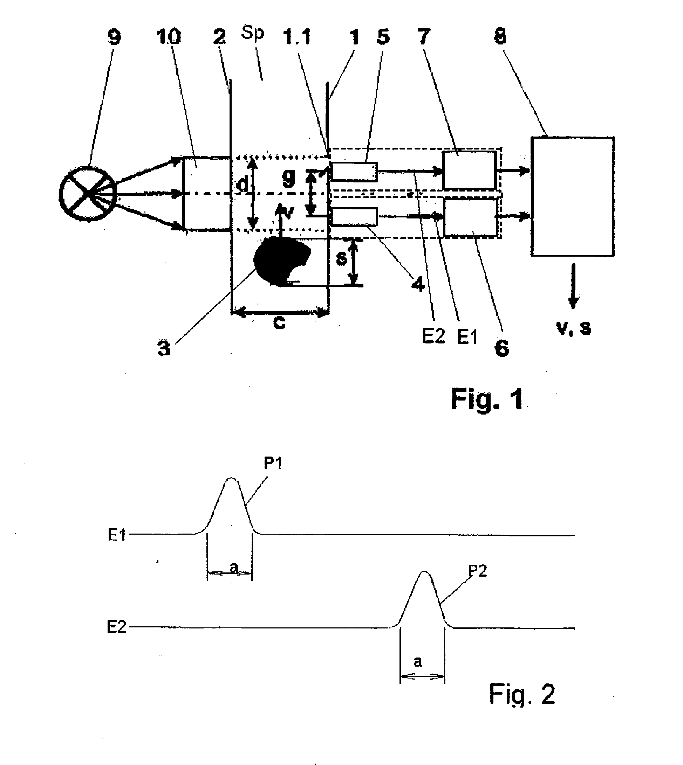

In Fig. 1 wird eine Prinzipdarstellung der Vorrichtung gezeigt, die zum Messen der in einer Strömung vorhandenen Partikel 3 eingesetzt wird. In diesem Fall bewegt sich eine Wasserströmung durch einen Messspalt Sp mit einer Breite c, wobei der Spalt durch eine lichtdurchlässige Wandung 1, 2 gebildet wird. In der Wasserströmung befindliche Partikel 3, die eine Größe s aufweisen, werden gemeinsam mit der Strömung des Wassers in Strömungsrichtung mit einer Geschwindigkeit v bewegt. Auf einer Seite sind ein erster Empfänger E1 (wird gebildet aus Lichtwellenleiter 4 und optoelektronischen Wandler 6) und ein zweiter Empfänger E2 (wird gebildet aus Lichtwellenleiter 5 und optoelektronischen Wandler 7) in Strömungsrichtung hintereinander angeordnet. Der erste und der zweite Empfänger E1, E2 sind mit einer Auswerteeinheit 8 verbunden. Auf der gegenüberliegenden Seite des Messspaltes Sp ist eine Strahlungsquelle 9 (bevorzugt eine Lichtquelle in Form eines Lasers) vorgesehen, der eine Parallelisierungsoptik 10 zugeordnet ist, mit welcher ein paralleles Lichtbündel mit dem Durchmesser d erzeugt wird. Der Durchmesser d des Lichtbündels und die Breite c des Messspaltes Sp definieren dabei das Messvolumen, welches an die optische Wirkungsfläche 1.1 der lichtdurchlässigen Wandung 1 auf der Seite der Empfänger E1, E2 angrenzt.

Bewegt sich ein Partikel 3 mit der Geschwindigkeit v in der Wasserströmung durch den Messspalt Sp, so erzeugt dieser durch die Lichtquelle 9 auf der gegenüberliegenden Seite ein Schattenbild auf der optischen Wirkungsfläche 1.1 im Bereich des Empfängers E1 und nach einer Zeitdifferenz To ein Schattenbild im Bereich des Empfängers E2. Durch den ersten Empfänger E1 wird ein erster Puls P1 und durch den zweiten Empfänger E2 ein zweiter Puls P2 als Signal an die Auswerteeinrichtung gesendet. In dieser werden bekannter Weise wie in DE 199 11 654 C1 beschrieben die Geschwindigkeit v und die Partikelgröße s berechnet und angezeigt und bedarfsweise gespeichert. Der Signalverlauf bei Erfassen eines Partikels wird in Fig. 2 gezeigt.

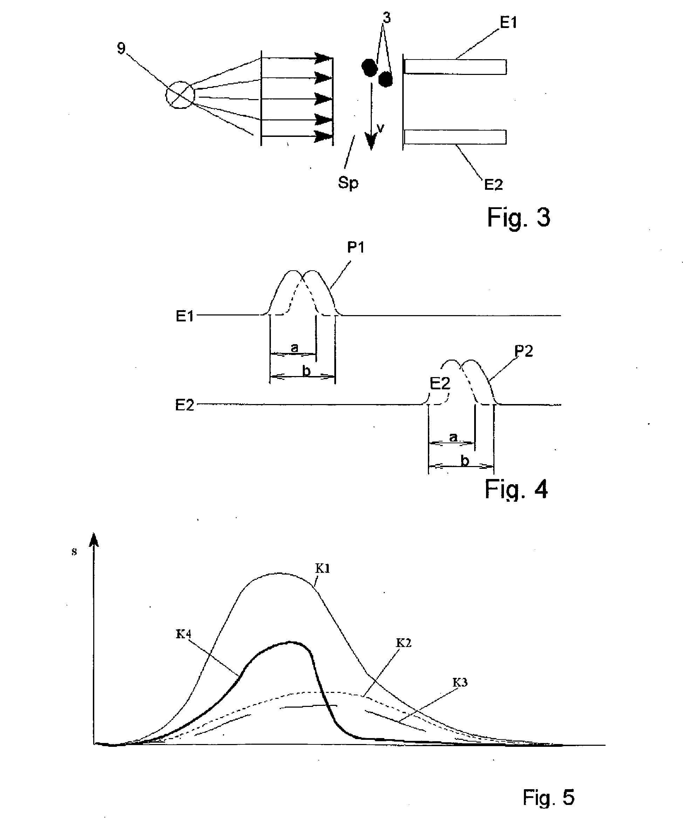

Die vereinfachte Darstellung der Vorrichtung bei zwei nebeneinander befindlichen Partikeln 3 ist in Fig. 3 dargestellt. Problem dabei ist, dass zwei oder mehr direkt aufeinander folgende Partikel 3 keinen deutlichen Zwischenraum aufweisen und dadurch nicht als mehrere separate Teilchen sondern als ein einziges größeres Partikel 3 gemessen werden. In Fig.4 ist der Signalverlauf bei Erfassen der beiden Partikel 3 dargestellt. Es ist ersichtlich, dass in dem Signalverlauf des ersten Empfängers E1 und des zweiten Empfängers E2 in dem Puls P1 und P2 im Plateau der Pulse P1 und P2 ein "Dacheinbruch" zu verzeichnen ist, der sich dadurch ergibt, dass der Empfänger nicht während der gesamten Zeit des Passierens beider Partikel vollständig abgeschattet wird, denn die Fläche des Schattenbildes wird bei Passieren dieser Partikel kurzzeitig reduziert und dann wieder vergrößert- Durch diesen Dacheinbruch wird eine Koinzidenz erkennbar und auswertbar, die zur Korrektur der Messung ver-wendet wird und ferner als ungättiges Messergebnis verworfen werden kann. In Fig. 4 stellt das Maß a die tatsächliche Größe des Partikels und das Maß b die scheinbare und falsche Größe dar.

Die erkannte Koinzidenz kann gem. Fig. 5 auch zur Korrektur der durchgeführten Messungen verwendet werden. Dabei stellt die Kurve K1 die gemessene Partikelgrößenverteilung, die Kurve K2 die Korrekturverteilung der gemessenen Koinzidenz, die Kurve K3 die Korrekturverteilung der nicht erkennbaren Koinzidenz und die Kurve K4 die Ergebnisverteilung dar.

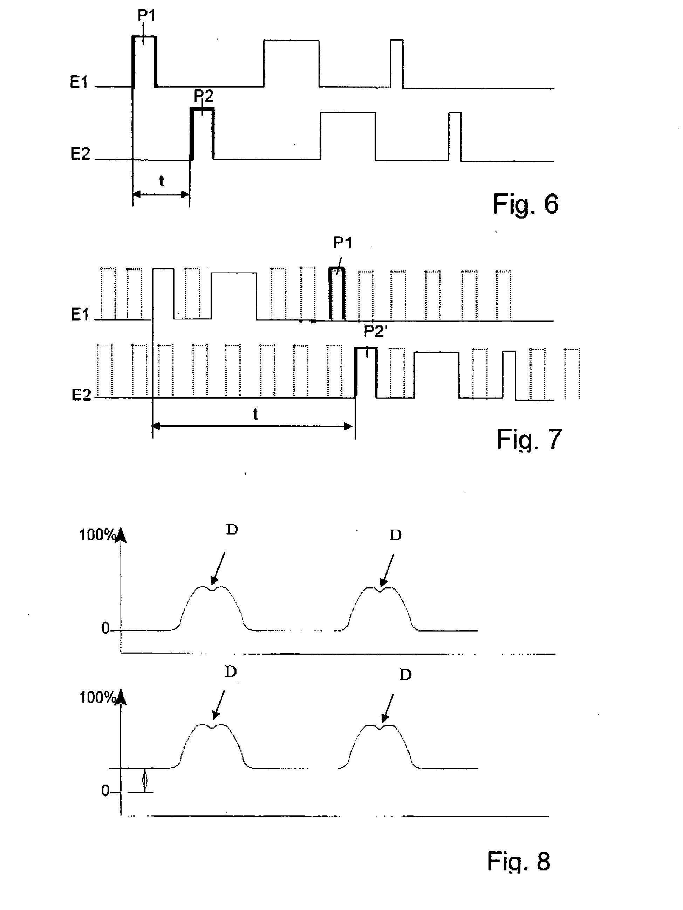

Die Zuordnung der Signale geht aus den Diagrammen gem. Fig. 6 und 7 hervor, wobei in Fig. 6 das Diagramm der auftretenden Pulse bei geringer Partikelkonzentration mit normaler Zuordnung der Signale und in Fig. 7 das Diagramm der auftretenden Pulse bei hoher Partikelkonzentration mit einer fehlerhaften Zuordnung der Signale dargestellt ist.

Gem. Fig. 6 folgt bei geringer Partikelkonzentration auf den Puls P1 des ersten Empfängers E1 unmittelbar in einer geringen Zeit t der Puls P1 des zweiten Empfängers E2.

Gem. Fig. 7 wurde der im Empfänger E1 erfasste Puls P1 in fehlerhafter Weise dem im Empfänger E2 erfassten Puls P2' zugeordnet.

Wird zwischen den Impulsen P1 und P2 gem. Fig. 6 eine relativ lange Zeit t benötigt, ist dies ein Indiz für eine fehlerhafte Zuordnung.

Die richtige Zuordnung der Partikel wird über die Impulsbreite realisiert, wobei davon ausgegangen wird, dass eine gleiche Pulsbreite in beiden Signalverläufen durch ein Partikel hervorgerufen wird.

Mit der erfindungsgemäßen Lösung ist es ebenfalls möglich, den Verschmutzungsgrad der durchsichtigen Wände 1, 2 des Messspaltes zu bestimmen, um so Aussagen über eine erforderliche Reinigung treffen zu können. Bisher war es üblich, die Amplitude auszuwerten und mit dem ursprünglichen Zustand zu vergleichen, wobei damit die Bestimmung des Verschmutzungsgrades nicht sicher ist. Daher wird erstmalig der 0-Pegel zwischen den einzelnen Pulssignalen, die im ersten und/oder zweiten Empfänger ausgegeben werden, als Maß für eine Verschmutzung ausgewertet. In Fig. 8 wird das Diagramm der Pulssignale bei unverschmutzter und verschmutzter Wandung des Messspaltes dargestellt. Die obere Darstellung zeigt die Pulssignale bei unverschmutzter und die untere Darstellung die Pulssignale bei verschmutzter Wandung. Daraus wird deutlich, dass der 0-Pegel bei Verschmutzung ansteigt (unteres Diagramm). Es ist weiterhin der Dacheinbruch D zu erkennen, der aus dem Absinken und Wiederansteigen Pulssignale resultiert. Es ist möglich, bei einem vorgegebenen Nullpegel die erforderliche Reinigung zu signalisieren.

Dazu können im Gehäuse der Messsonde (nicht dargestellt) entsprechende LEDs vorgesehen sein, die den entsprechenden Zustand anzeigen. Weiterhin können durch entsprechende LEDs Power - on/off (z.B. grün für on), die Laserintensität (z.B. grün für ausreichend, rot für zu schwach) und die Signalstärke (z.B grün für gut, gelb für schwach, rot für zu gering) angezeigt werden.

Mit der erfindungsgemäßen Lösung wird eine zuverlässige Partikelmessung gewährleistet, die neben der Ermittlung der Strömungsgeschwindigkeit und der Partikelgröße durch die Erkennung und Bewertung von Koinzidenzen eine hohe Messsicherheit und Genauigkeit gewährleistet. Es wird insbesondere eine korrekte Messung der Partikelgröße sichergestellt. Durch die neuartige Zuordnung der Messwerte, die Anzeige des Verschmutzungsgrades und des Arbeitszustandes der Messsonde werden fehlerhafte Messungen und Bedienfehler vermieden.

### Bezugszeichenliste

- 1: Wandung
- 1.1: optische Wirkungsfläche
- 2: Wandung
- 3: Partikel
- 4: Lichtwellenleiter
- 5: Lichtwellenleiter
- 6: optoelektronischer Wandler
- 7: optoelektronischer Wandler
- 8: Auswerteeinheit
- 9: Lichtquelle
- 10: Parallelisierungsoptik
- a: tatsächliche Größe des Partikels
- b: scheinbare falsche Größe des Partikels
- D: Dacheinbruch
- E1: erster Empfänger
- E2: zweiter Empfänger
- K1: Kurve der gemessene Partikelgrößenverteilung
- K2: Kurve der Korrekturverteilung der gemessenen Koinzidenz
- K3: Kurve der Korrekturverteilung der nicht erkennbaren Koinzidenz
- K4: Kurve der Ergebnisverteilung
- P1: Puls 1
- P2: Puls 2
- To: Zeitdifferenz
- s: Partikelgröße
- Sp: Spalt
- t: Zeit
- v: Geschwindigkeit

## Patentansprüche

1. Verfahren zur Bestimmung der in einem Partikelstrom enthaltenen Partikel unter Verwendung einer Strahlungsquelle (9) und zwei in Strömungsrichtung versetzt zueinander angeordneten Empfängern (E1, E2), die in Abhängigkeit von der empfangenen Strahlungsintensität einer Auswerteeinheit (8) ein elektrisches Signal zur Verfügung stellen, wobei das Signal die Bestimmung von Strömungsgeschwindigkeit und Partikelgröße ermöglicht und ein im Signal auftretender Puls, der bei Passieren der Partikel eines Empfängers durch eine Schwächung der Strahlungsintensität hervorgerufen wird, durch einen in diesem Puls vorhandenen "Dacheinbruch" (D) eine Koinzidenz anzeigt, **dadurch** charakterisiert, daβ eine Größenverteilung erkannter Koinzidenzen gebildet und als Korrekturverteilung von der gemessenen Partikelgrößenverteilung abgezogen wird.

2. Verfahren nach Anspruch 1, **dadurch gekennzeichnet, dass** die Empfänger nicht während der gesamten Zeit des Passierens der Partikel vollständig abgeschattet werden, wodurch bei Koinzidenz der "Dacheinbruch" entsteht.

3. Verfahren nach Anspruch 1 oder 2, **dadurch gekennzeichnet, dass** aus der Verteilung erkannter Koinzidenzen auf eine Verteilung nicht erkennbarer Koinzidenzen schließbar ist und die Verteilung nicht erkennbarer Koinzidenzen als Korrekturverteilung von der gemessenen Partikelvergrößerung abgezogen wird.

4. Verfahren nach Anspruch 1 oder 2, **dadurch gekennzeichnet, dass** erkannte Koinzidenzen als ungültige Messungen verworfen werden.

5. Verfahren nach Anspruch 4 , **dadurch gekennzeichnet, dass** in Abhängigkeit eines Pulses mit einer Position X im Signal des ersten Empfängers an der Position X + t im Signal des zweiten Empfängers ein Puls gesucht wird.

6. Verfahren nach Anspruche 4 oder 5, **dadurch gekennzeichnet, dass** durch Prüfung vorgegebener Toleranzen für die Pulsbreite festgestellt wird, ob ein im Signal des zweiten Empfängers hervorgerufener Puls identisch mit dem im Signal des ersten Empfängers hervorgerufenen Puls ist.

7. Verfahren nach einem der Ansprüche 1 bis 6, **dadurch gekennzeichnet dass** im Signal des ersten Empfängers und/oder im Signal des zweiten Empfängers der Nullpegel zwischen den einzelnen Pulsen erfasst und als Maß für eine Verschmutzung einer den Messspalt umgebenden durchsichtigen Wandung ausgewertet wird.

8. Verfahren nach einem der Ansprüche 1 bis 7, **dadurch gekennzeichnet, dass** mittels eine oder mehrerer Anzeigeeinheit/en, die gemeinsam mit dem ersten Empfänger, dem zweiten Empfänger und der Auswerteeinheit in einem gemeinsamen Gehäuse angeordnet ist/sind, der Zustand der Messsonde während des Betriebes angezeigt wird.

9. Vorrichtung zur Durchführung des Verfahrens nach Anspruch 1, umfassend eine Strahlungsquelle (9), zwei Empfänger (E1, E2), eine Auswerteeinheit (8), eine oder mehrere Anzeigeeinheit/en sowie ein gemeinsames Gehäuse,
wobei die zwei Empfänger (E1, E2) in Strömungsrichtung versetzt zueinander angeordnet sind und in Abhängigkeit von der empfangenen Strahlungsintensität einer Auswerteeinheit (8) ein elektrisches Signal zur Verfügung stellen, und wobei das elektrische Signal in der Auswerteeinheit (8) ausgewertet und eine Koinzidenz aus einem im Kurvenverlauf des Signals bei Passieren der Partikel auftretenden Puls und einem im Puls vorhandenen "Dacheinbruch" (D) bestimmt wird, **dadurch gekennzeichnet, dass**
die Auswerteeinheit (8) zur Bildung der Größenverteilung erkannter Koinzidenzen als Korrekturverteilung und zum Abziehen dieser Korrekturverteilung von der gemessenen Partikelgrößenverteilung ausgelegt ist,
und dass eine oder mehrere Anzeigeeinheit/en gemeinsam mit dem ersten Empfänger (E1), dem zweiten Empfänger (E2) und der Auswerteeinheit (8) in dem gemeinsamen Gehäuse angeordnet ist/sind.

10. Vorrichtung nach Anspruch 9, **dadurch gekennzeichnet, dass** in der Auswerteeinheit aus dem Signal des ersten Empfängers und dem Signal eines zweiten Empfängers zur Ermittlung einer durchschnittlichen Zeitverschie-bung zwischen beiden Signalen, die durch ein Partikel hervorgerufen wird, eine Kreuzkorrelation durchgeführt wird.

11. Vorrichtung nach Anspruch 9 oder 10, **dadurch gekennzeichnet, dass** bei einem durch ein Partikel hervorgerufenen Puls mit einer Position X im Signal des ersten Empfängers ein Puls im Signal des zweiten Empfängers an der Position X + t ermittelt wird.

12. Vorrichtung nach einem der Ansprüche 9 bis 11 , **dadurch gekennzeichnet, dass** in der Auswerteeinrichtung vorgegebene Toleranzen für die Pulsbreite auswertbar sind.

13. Vorrichtung nach einem der Ansprüche 9 bis 12 , **dadurch gekennzeichnet, dass** sie einen Messspalt mit einer durchsichtigen Wandung aufweist und dass hinter der Wandung der erste Empfänger und der zweite Empfänger angeordnet sind und der Nullpegel zwischen den einzelnen durch Partikel hervorgerufenen Pulsen als Maß für eine Verschmutzung der Wandung in der Auswerteeinheit auswertbar ist.

14. Vorrichtung nach einem der Ansprüche 9 bis 13 , **dadurch gekennzeichnet, dass**
- eine erste Anzeigeeinheit den Zustand Ein/Aus und/oder
- eine zweite Anzeigeeinheit die Laserintensität und/oder
- eine dritte Anzeigeeinheit die Signalstärke
anzeigt.

15. Vorrichtung nach einem der Ansprüche 9 bis 14 , **dadurch gekennzeichnet, dass** die Anzeigeeinheit/en als LED/LEDs ausgebildet ist/sind und dass die LEDs unterschiedliche Farben entsprechend des anzuzeigenden Zustandes aufweisen.

## Claims

1. Method for determining the particles contained in a particle stream using a radiation source (9) and two receivers (E1, E2) arranged in a way that they are offset to one another in the direction of flow, which depending on the radiation intensity received provide an evaluation unit (8) with an electrical signal which in turn allows for the determination of the flow velocity and the particle size and a pulse occurring in the signal which is generated by a decrease of the radiation intensity when the particles are passing through a receiver and which indicates a coincidence by virtue of a "pulse droop" (D) in this pulse, **characterised by** the fact that a size distribution of detected coincidences is generated and subtracted from the particle size distribution measured.

2. Method according to claim 1, **characterised by** the fact that the receivers are not totally shadowed during the entire period of particles passing through resulting In the "pulse droop" in the case of coincidence.

3. Method according to claim 1 or 2, **characterised by** the fact that from the distribution of detected coincidences you can gather the distribution of non-detectable coincidences and the distribution of non-detectable coincidences will be detracted from the increase in the size of the particles as a corrective distribution.

4. Method according to claim 1 or 2, **characterised by** the fact that any detected coincidences will be neglected as invalid measurements.

5. Method according to claim 4, **characterised by** the fact that a pulse is searched for at the position X + t in the signal of the second receiver as a function of a pulse with the position X in the signal of the first receiver.

6. Method according to claim 4 or 5, **characterised by** the fact that by checking the given tolerances relating to the pulse width it can be determined whether a pulse generated within the signal of the second receiver Is identical with the pulse generated within the signal of the first receiver.

7. Method according to claims 1 to 6, **characterised by** the fact that within the signal of the first and/or within the signal of the second receiver the zero level between the individual pulses is determined and analysed as a measurement for the contamination of a transparent wall surrounding the measurement gap.

8. Method according to claims 1 to 7, **characterised by** the fact that the state of the measuring sensor during operation is indicated by means of one or more display unit(s) arranged in a common housing together with the first and the second receiver and the evaluation unit.

9. Device for carrying out the method according to claim 1, including a radiation source (9), two receivers (E1, E2), one evaluation unit (8), one or more display unit(s) as well as a common housing, and the two receivers (E1, E2) are arranged in a way that they are offset against one another in the direction of flow and depending on the radiation intensity received provide an evaluation unit (8) with an electrical signal and such electrical signal is analysed in the evaluation unit (8) and a coincidence is determined from a pulse generated in the curve of the signal when the particles are passing through and from a "pulse droop" (D) occurring in the pulse, **characterised by** the fact that the evaluation unit (8) has been designed for generating the size distribution of detected coincidences as a corrective distribution and for subtracting this corrective distribution from the particle size distribution measured, and that one or more display unit(s) is/are arranged in the common housing together with the first (E1) and the second receiver (E2) and the evaluation unit (8).

10. Device according to claim 9, **characterised by** the fact that in the evaluation unit of the first and the second receiver's signal a cross-correlation is carried out in order to determine the average time shift between both signals caused by a particle.

11. Device according to claim 9 or 10, **characterised by** the fact that a pulse is determined at the position X + t in the signal of the second receiver in a pulse generated by a particle with the position X in the signal of the first receiver.

12. Device according to claims 9 to 11, **characterised by** the fact that given tolerances relating to the pulse width are evaluable in the evaluation unit.

13. Device according to one of the claims 9 to 12, **characterised by** the fact that it has a measurement gap with a transparent wall and that behind that wall the first and the second receiver is arranged and that the zero level between the individual pulses generated by particles is evaluable in the evaluation unit as a measurement for the contamination of the wall.

14. Device according to one of the claims 9 to 13, **characterised by** the fact that
- a first display unit displays the ON/OFF state and/or
- a a second display unit displays the laser intensity and/or
- a third display unit displays the intensity of the signal.

15. Device according to one of the claims 9 to 14, **characterised by** the fact that the display unit(s) is/are designed as LED/LEDs and that the LEDs have different colours according to the state to be indicated.

## Revendications

1. Procédure permettant de déterminer les particules présentes dans un flux de particules en utilisant une source de radiation (9) et deux récepteurs (E1, E2) décalés l'un par rapport à l'autre dans le sens de déplacement des ondes, qui transmettent à une unité d'exploitation (8) un signal électrique dépendant de l'intensité de l'onde perçue, signal électrique permettant de déterminer la vitesse de déplacement et la taille des particules, ainsi qu'une impulsion présente dans le signal, provoquée lorsque les particules passent un récepteur par un affaiblissement de l'intensité du signal, présentant une coïncidence de la "brèche de toit" (D) dans l'impulsion, **caractérisée par le fait qu'**une répartition selon la taille des coïncidences identifiées, formée et utilisée en tant que répartition de correction, retirée de la répartition des tailles de particules mesurées.

2. Procédure d'après l'exigence 1, **caractérisée par le fait que** les récepteurs ne sont pas complètement occultés durant l'ensemble de la durée de passage des particules, ce qui provoque la « brèche de toit » en cas de coïncidence.

3. Procédure d'après l'exigence 1 ou 2, **caractérisée par le fait qu'**une répartition de coïncidences identifiées peut être assimilée à une répartition de coïncidences non identifiées et que la répartition de coïncidences non identifiées est retirée de l'agrandissement des particules en tant que répartition de correction.

4. Procédure d'après l'exigence 1 ou 2, **caractérisée par le fait que** des coïncidences identifiées peuvent être supprimées en tant que mesures non valables.

5. Procédure d'après l'exigence 4, **caractérisée par le fait qu'**une impulsion est recherchée à la position X+t dans le signal du deuxième récepteur, dépendant de l'impulsion à la position X dans le signal du premier récepteur.

6. Procédure d'après les exigences 4 ou 5, **caractérisée par le fait que** lors du contrôle des tolérances données pour la largeur de impulsion, on constate si une impulsion dans le signal du deuxième récepteur est identique à l'impulsion dans le signal du deuxième récepteur.

7. Procédure d'après une des exigences 1 à 6, **caractérisée par le fait que**, dans le signal du premier récepteur et/ou dans le signal du deuxième récepteur, le niveau zéro est détecté entre chaque impulsion et sert de mesure pour la pollution d'une paroi translucide entourant la colonne de mesure.

8. Procédure d'après une des exigences 1 à 7, **caractérisée par le fait que** l'état de la sonde de mesure est indiqué durant l'utilisation à l'aide d'une unité d'affichage ou d'un ensemble d'unités d'affichage montés ensembles avec le premier récepteur, le deuxième récepteur et l'unité d'exploitation dans un boîtier commun.

9. Dispositif pour l'exécution de la procédure d'après l'exigence 1, comprenant une source de radiation (9), deux récepteurs (E1, E2), une unité d'exploitation (8), une ou plusieurs unités d'affichage, ainsi qu'un boîtier commun, où les deux récepteurs (E1, E2) sont décalés l'un par rapport à l'autre dans le sens de propagation des ondes et transmettent à une unité d'exploitation (8) un signal électrique dépendant de l'intensité de l'onde perçue, et où le signal électrique est exploité dans l'unité d'exploitation (8) et une coïncidence issue d'une impulsion provoquée dans le déroulement du signal lors du passage de particules et d'une « brèche de toit » (D) présente dans l'impulsion, **caractérisé par le fait que** l'unité d'exploitation (8) est prévue pour la répartition selon la taille des coïncidences identifiées en tant que répartition de correction et pour le retrait de cette répartition de correction de la répartition des particules mesurées selon leur taille, et qu'une ou plusieurs unités d'affichage connectées avec le premier récepteur (E1), le deuxième récepteur (E2) et l'unité d'exploitation (8) rassemblés dans un boîtier commun.

10. Dispositif d'après l'exigence 9, **caractérisé par le fait que** l'unité d'exploitation effectue une corrélation croisée entre le signal émis par le premier récepteur et le signal émis par un deuxième récepteur, afin de déterminer la moyenne du différentiel temporel entre les deux signaux provoqués par une particule.

11. Dispositif d'après les exigences 9 ou 10, **caractérisé par le fait que** dans le cas d'une impulsion provoquée par une particule, à la position X dans le signal du premier récepteur, une impulsion est détectée à la position X+t dans le signal du deuxième récepteur.

12. Dispositif d'aprés une des exigences 9 à 11, **caractérisé par le fait que** les tolérances pour la taille des impulsions peuvent être réglées dans l'unité d'exploitation.

13. Dispositif d'après une des exigences 9 à 12, **caractérisé par le fait qu'**il dispose d'une colonne de mesure à paroi translucide, paroi derrière laquelle le premier, puis le deuxième récepteurs sont placés et le niveau zéro est atteint entre chaque impulsion provoquée par les particules, pour mesurer la pollution de la paroi, permet à l'unité d'exploitation d'exploiter les données.

14. Dispositif d'après une des exigences 9 à 13, **caractérisé par le fait que**
- une première unité d'affichage indique l'état allumé ou éteint, et/ou
- une deuxième unité d'affichage indique l'intensité du laser, et/ou
- une troisième unité d'affichage indique l'intensité du signal.

15. Dispositif d'après une des exigences 9 à 14, **caractérisé par le fait que** les unités d'affichage sont constituées d'écrans LED et que les LED sont de plusieurs couleurs en fonction de l'état qu'elles doivent indiquer.
